# EUROPEAN PATENT APPLICATION

(11) **EP 2 704 329 A1**
(43) Date of publication of application: **05.03.2014**
(21) Application number: 13173874.2
(22) Date of filing: 26.06.2013
(51) Int. Cl.: H03K 17/96, G06K 19/07, G07F 7/10, G06Q 20/34

(54) **Piezo-based switch for active cards**

(30) Priority: 28.08.2012 US 201261694102 P; 25.06.2013 US 201313926566
(71) Applicant: Honeywell International Inc., Morristown, NJ 07962-2245 (US)
(72) Inventor: Lust, Lisa, Morristown, NJ New Jersey 07962-2245 (US); Carlson, Doug, Morristown, NJ New Jersey 07962-2245 (US)
(74) Representative: Houghton, Mark Phillip

(57) **Abstract**

An active card, such as a smart credit or debit card, includes a substrate 50, a piezoelectric film sensor 110 embedded in the substrate, and an active card module 160 embedded in the substrate and coupled to the piezoelectric film sensor. The piezoelectric film sensor receives an input stimulation and outputs a voltage in response to the input stimulation. The active card module receives the voltage generated by the piezoelectric film sensor and executes a function.

## Description

### Technical Field

The present disclosure relates to a use of a piezo-based switch in an active card.

### Related Applications

The present application claims priority to U.S. Serial Application No. 61/694,102, the content of which is incorporated herein by reference in its entirety.

### Government Interest

The present invention was made with support from the United States government under contract number ****-***9825-***. The United States government has certain rights in this invention.

### Background

Active cards, such as an active credit card or debit card, include one or more of an embedded microprocessor and a display unit, which provide intelligent capabilities to the card. For example, a user can tap an active credit card or press a button on the active credit card to activate one or more functionalities of the active card. As such, an active card requires a robust switch mechanism for both on/off and function capabilities.

### Brief Description of the Drawing

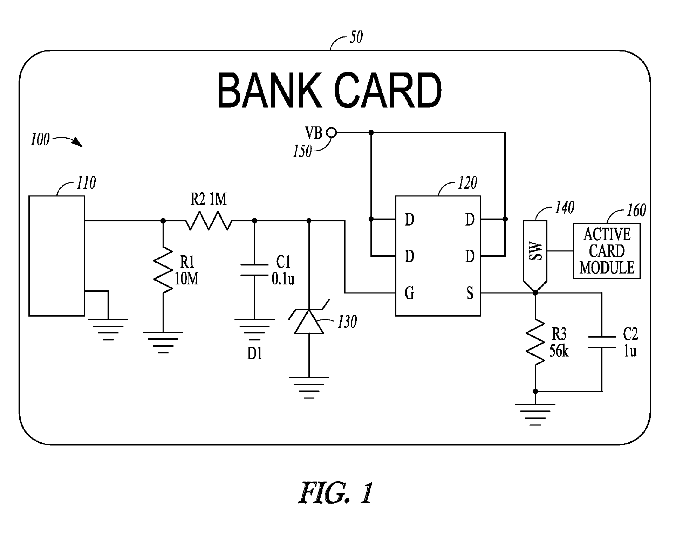

**FIG. 1** is a diagram of an example circuit of a piezo-based switch for use in an active card.

### Detailed Description

In the following description, reference is made to the accompanying drawings that form a part hereof, and in which is shown by way of illustration specific embodiments which may be practiced. These embodiments are described in sufficient detail to enable those skilled in the art to practice the invention, and it is to be understood that other embodiments may be utilized and that structural, electrical, and optical changes may be made without departing from the scope of the present invention. The following description of example embodiments is, therefore, not to be taken in a limited sense, and the scope of the present invention is defined by the appended claims.

In an embodiment, piezoelectric film sensors form the basis of a viable circuit that can be used to activate functions in a non-contact manner in an active card module such as a smart card. The circuit or switch can be used for activation, deactivation, or other additional functionalities in the embedded circuit of the active card. The piezoelectric film sensor is comprised of a thin film sensor element that outputs voltage in response to a dynamic strain. Consequently, if the active card is bent or tapped in a known manner, the piezoelectric switch outputs a voltage that can be used to trigger a circuit embedded in the active card to execute a specific operation.

In an embodiment, the piezoelectric film is covered by a thin insulating film coating, with only contact leads exposed. The thin insulating film coating can be a urethane coating. The piezoelectric film can be shielded inside a foil membrane. In one example embodiment, the piezoelectric film sensor is positioned between the embedded circuit's ground plate and a lithium polymer battery. This construct shields against noise sources that can trigger the device inadvertently.

The piezoelectric film sensor circuit should be designed so as to avoid unintentionally triggering the circuit, for example, if the card is dropped. As one of skill in the art will appreciate, precise values of circuit components depend on the capacitive value of the piezoelectric film membrane and the desired ease or difficulty in triggering the circuit.

**FIG. 1** is a diagram of an example circuit **100** of a piezoelectric film switch for use on an active card **50.** The circuit **100** of **FIG. 1** differs from traditional piezo switch circuits in that the traditional piezo electric circuits are thick and bulky, and embodiments of the circuit **100** of **FIG. 1** are not as thick or bulky. For example, traditional piezo-electric circuits have a thickness of approximately 62 mils, and an embodiment of the circuit **100** of **FIG. 1** can have a thickness of approximately 10 mils.

The circuit **100** in **FIG. 1** includes a piezoelectric membrane or sensor **110,** an NMOSFET device **120,** and a zener diode **130.** The components of the circuit **100** are embedded within or deposited on a substrate of the active card. The substrate can be a hard but lightly flexible plastic that is typical of credit, debit, and gift cards. The zener diode **130** protects the MOSFET gate owing to the fact that the piezo membrane **110** outputs high voltage spikes. The circuit **100** is coupled to an internal battery **150** of the active card. The output of the circuit **100** is given by the port SW **140,** and the output is typically sent to an embedded circuit, module, and/or microprocessor **160** of the active card **50.** Once again, the exact values of the components of the circuit **100** depend on the piezoelectric membrane **110,** the IV characteristics of the NMOSFET, and the desired operational characteristics. Example values are provided in **FIG. 1** for a particular embodiment.

The circuit **100** of the active card **50** functions as follows. The piezoelectric film sensor **110** receives an input stimulation, which causes the piezoelectric film sensor **110** to output a voltage in response to the input stimulation. The input stimulation can be such things as a tapping of the active card or a bending of the active card, thereby inducing a dynamic strain in the piezoelectric film and the generation of a voltage. The active card module **160** receives the voltage generated by the piezoelectric film sensor **110,** and the active card module **160** executes a function in response to the received voltage. The function executed by the active card module **160** can include such things as activation of the embedded circuit, a deactivation of the embedded circuit, or an addition of a function to the embedded circuit. As noted, a battery **150** is coupled to the active card module **160.** A ground plane (not illustrated in **FIG. 1****)** can be associated with the active card module **160,** and the piezoelectric film **110** can be positioned between the ground plane and the battery. In an embodiment, a foil membrane (not illustrated in **FIG. 1****)** is positioned proximate to the piezoelectric film sensor **110.** The foil membrane shields the piezoelectric film sensor **110.**

It should be understood that there exist implementations of other variations and modifications of the invention and its various aspects, as may be readily apparent, for example, to those of ordinary skill in the art, and that the invention is not limited by specific embodiments described herein. Features and embodiments described above may be combined with each other in different combinations. It is therefore contemplated to cover any and all modifications, variations, combinations or equivalents that fall within the scope of the present invention.

The Abstract is provided to comply with 37 C.F.R. § 1.72(b) and will allow the reader to quickly ascertain the nature and gist of the technical disclosure. It is submitted with the understanding that it will not be used to interpret or limit the scope or meaning of the claims.

In the foregoing description of the embodiments, various features are grouped together in a single embodiment for the purpose of streamlining the disclosure. This method of disclosure is not to be interpreted as reflecting that the claimed embodiments have more features than are expressly recited in each claim. Rather, as the following claims reflect, inventive subject matter lies in less than all features of a single disclosed embodiment. Thus the following claims are hereby incorporated into the Description of the Embodiments, with each claim standing on its own as a separate example embodiment.

## Claims

1. An active card comprising:
a substrate; (50)
a piezoelectric film sensor (110) embedded in the substrate; and
an active card module (160) embedded in the substrate and coupled to the piezoelectric film sensor; (110)
wherein the piezoelectric film sensor (110) is operable to receive an input stimulation and is operable to output a voltage in response to the input stimulation; and
wherein the active card module (160) is operable to receive the voltage generated by the piezoelectric film sensor (110) and execute a function.

2. The active card of claim 1, wherein the active card module comprises an embedded circuit. (160)

3. The active card of claim 2, wherein the embedded circuit comprises a microprocessor. (160)

4. The active card of claim 2, wherein the function comprises an activation of the embedded circuit, a deactivation of the embedded circuit, or an addition of a function to the embedded circuit. (160)

5. The active card of claim 1, wherein the input stimulation comprises a tapping of the active card or a bending of the active card (50), thereby inducing a dynamic strain in the piezoelectric film. (110)

6. The active card of claim 1, wherein the piezoelectric film sensor comprises:
a piezoelectric membrane; (110)
an NMOSFET device (120) coupled to the piezoelectric membrane; and
an output port (140) coupled to the NMOSFET device.

7. The active card of claim 6, wherein the output port is coupled to the active card module. (140, 160)

8. The active card of claim 6, comprising a zener diode (130) positioned between and coupled to the piezoelectric membrane (110) and the NMOSFET device (120).

9. An active card comprising:
a substrate; (50)
a piezoelectric film sensor (110) embedded in the substrate; and
a microprocessor (160) embedded in the substrate and coupled to the piezoelectric film sensor; (110)
wherein the piezoelectric film sensor (110) is operable to receive an input stimulation and is operable to output a voltage in response to the input stimulation; and
wherein the microprocessor (160) is operable to receive the voltage generated by the piezoelectric film sensor and execute a function.

10. The active card of claim 9, wherein the function comprises an activation of the microprocessor, a deactivation of the microprocessor, or an addition of a function to the microprocessor. (160)

11. The active card of claim 9, wherein the input stimulation comprises a tapping of the active card (50) or a bending of the active card, thereby inducing a dynamic strain in the piezoelectric film. (110)

12. The active card of claim 9, comprising an insulating film coating disposed on the piezoelectric film sensor. (110)

13. The active card of claim 12, wherein the insulating film coating comprises urethane. (110)

14. The active card of claim 9, wherein the piezoelectric film sensor comprises:
a piezoelectric membrane; (110)
an NMOSFET device (120) coupled to the piezoelectric membrane; and
an output port (140) coupled to the NMOSFET device.

15. The active card of claim 14, comprising a zener diode (130) positioned between and coupled to the piezoelectric membrane and the NMOSFET device.
